# EUROPÄISCHE PATENTSCHRIFT

(11) **EP 0 990 843 B1**
(45) Veröffentlichungstag und Bekanntmachung des Hinweises auf die Patenterteilung: **22.11.2006**
(21) Anmeldenummer: 99119484.6
(22) Anmeldetag: 30.09.1999
(51) Int. Cl.: F21V 31/00

(54) **Fahrzeugscheinwerfer und Verfahren zum Herstellen eines Fahrzeugscheinwerfers**
Motor vehicle headlamp and method of making the same
Projecteur pour véhicule automobile et procédé de fabrication de celui-ci

(30) Priorität: 02.10.1998 DE 19845459
(43) Veröffentlichungstag der Anmeldung: 05.04.2000
(73) Patentinhaber: Hella KGaA Hueck & Co., 59552 Lippstadt (DE)
(72) Erfinder: Kemper, Wolfgang, 59602 Rüthen (DE)

(56) Entgegenhaltungen:
- DE-A- 19 522 945
- FR-A- 2 630 526
- US-A- 5 130 904
- US-A- 5 285 357
- US-A- 5 390 088

## Beschreibung

Die Erfindung betrifft einen Fahrzeugscheinwerfer mit einem topfförmigen Gehäuse, mit einer an einer Rückseite des Gehäuses angeordneten Öffnung zur Aufnahme einer Lampe, mit einem Arretierungsring, in dem ein Sockel der Lampe abnehmbar befestigt ist, mit einem den Arretierungring umgebenden flexiblen Dichtrahmen, der mit einem Öffnungsrand des Gehäuses verbunden ist.

Die Erfindung betrifft weiterhin ein Verfahren zum Herstellen eines Fahrzeugscheinwerfers, wobei ein eine Lampe aufnehmender Arretierungsring in eine rückseitige Öffnung eines Gehäuses eingesetzt wird und durch einen mit dem Gehäuse verbundenen Dichtrahmen gehalten wird.

Aus der gattungsgemäßen DE 195 22 945 A1 ist ein Fahrzeugscheinwerfer mit einem topfförmigen Gehäuse bekannt, der im Bereich der an der Rückseite des Gehäuses angeordneten Öffnung eine einteilige Sockelabdeckung aufweist. Die Sockelabdeckung weist einen inneren hülsenförmigen Abschnitt auf, der mit seinen innenliegenden Nuten auf einen Lampensockel herum aufgesetzt ist. Die Sockelabdeckung weist ferner einen hakenförmigen äußeren Abschnitt auf, der ebenfalls eine sich in axialer Richtung erstreckende Reihe von Nuten aufweist und mit einem nach hinten abragenden Steg des Gehäuses in Eingriff steht. Nachteilig an dem bekannten Fahrzeugscheinwerfer ist, daß ein relativ hoher Aufwand betrieben werden muß, um die geforderte Dichtigkeit des Scheinwerfers auf der Rückseite zu gewährleisten.

Aus der DE 43 23 118 C1 ist ein Scheinwerfer mit einem topfförmigen Gehäuse bekannt, dessen Öffnung auf der Rückseite durch zwei separate Bauteile abgedeckt wird. Ein innerer Arretierungsring umfaßt eine Lampe, und ist mit dieser lösbar verbunden. Radial nach außen ist ein den Arretierungsring umgebender flexibler Dichtrahmen angeordnet, der mäanderförmig ausgebildet ist und mit einem inneren Lappen flächig an dem Arretierungsring und mit einem äußeren Lappen auf einer Außenseite des Gehäuses aufliegt. Nachteilig an dem bekannten Fahrzeugscheinwerfer ist, daß die Rückseite des Gehäuses fast vollständig abgedeckt ist. Der Dichtrahmen muß daher relativ dickwandig ausgebildet sein. Außerdem füllt der Dichtrahmen aufgrund seiner Mäanderförmigkeit einen Teil des Innenraumes des Gehäuses aus. Weiterhin ist die Montage des Dichtrahmens infolge des manuellen Aufsetzen relativ aufwendig.

Aufgabe der vorliegenden Erfindung ist es daher, einen Fahrzeugscheinwerfer derart weiterzubilden, daß die Dichtigkeit des Gehäuses an der Rückseite bei gleichzeitiger Erhöhung der Platzersparnis verbessert wird.

Die Aufgabe wird erfindungsgemäß dadurch gelöst, daß der Dichtrahmen einstückig mit dem Gehäuse verbunden ist.

Der Vorteil des erfindungsgemäßen Fahrzeugscheinwerfers besteht insbesondere darin, daß durch die Einstückigkeit des Dichtrahmens mit dem Gehäuse die Gefahr einer Undichtigkeit wesentlich reduziert ist. Die Verbindung des Dichtrahmens an dem Gehäuse erfolgt vorzugsweise durch Anspritzen eines elastischen Materials.

Nach einer bevorzugten Ausführungsform der Erfindung ist der Dichtrahmen entlang eines Öffnungsrandes der Rückseite des Gehäuses mit demselben verbunden, wobei sich der Dichtrahmen im wesentlichen in der Ebene der Rückseite erstreckt. Der Dichtrahmen kann so als Verlängerung des Öffnungsrandes dienen und bildet somit einen Teil der Rückseite des Gehäuses. Der Dichtrahmen ist an die Gestaltung bzw. Form der Rückseite anpassbar. Durch die Erstreckung des Dichtrahmens im wesentlichen quer zur optischen Achse der Lampe weist der Scheinwerfer eine geringere Bautiefe auf. Ferner wird innerhalb des Gehäuses Bauraum geschaffen, so daß ein Verstellelement platzsparend zur Positionierung der Lampe auf dieselbe einwirken kann.

Nach einer Ausgestaltung der Erfindung weist der Dichtrahmen in einem dem Öffnungsrand der Rückseite zugewandten Befestigungsbereich zwei gabelförmig ausgebildete Befestigungslappen auf, die haftend um einen Befestigungsflansch des Öffnungsrandes greifen. Vorzugsweise weist der Öffnungsrand ein Lochprofil auf, so daß eine innige Verbindung zwischen dem Dichtrahmen und dem Gehäuse geschaffen werden kann. Somit kann eine feste Verbindung zwischen dem Gehäuse und dem Dichtrahmen geschaffen werden, wobei die Dichtigkeit erhöht wird.

Weitere Aufgabe der vorliegenden Erfindung ist es, ein Verfahren zum Herstellen eines Fahrzeugscheinwerfers anzugeben, so daß der Montageaufwand und der Platzbedarf des Scheinwerfers verringert wird.

Diese Aufgabe wird erfindungsgemäß dadurch gelöst, daß das Gehäuse unter Bildung eines Öffnungsrandes durch Spritzgießen hergestellt und daß dann ein Polymer geringen Vernetzungsgrades am Umfang des Öffnungsrandes haftend vulkanisiert wird.

Der Vorteil des erfindungsgemäßen Verfahrens besteht insbesondere darin, daß durch das Umspritzen des Öffnungsrandes mittels eines Polymers geringen Vernetzungsgrades eine dichte Verbindung hergestellt wird. Das Umspritzen kann unmittelbar nach Spritzgießen des Gehäuses erfolgen. Dabei ist der Dichtrahmen derart geformt, daß der Arretierungsring einfach von vorne einsetz- und an der vorgegebenen Stelle positionierbar ist. Auf diese Weise läßt sich der Automatisierungsgrad des Fertigungsablaufs wesentlich erhöhen.

Ein Ausführungsbeispiel der Erfindung wird nachfolgend anhand der Zeichnungen näher beschrieben.

In den Zeichnungen zeigen:
- Figur 1:: einen Längsschnitt durch einen Fahrzeugscheinwerfer,
- Figur 2:: einen Querschnitt durch den Fahrzeugscheinwerfer,
- Figur 3:: einen Teilschnitt entlang der Linie III- III in Figur 1 ohne Darstellung eines Verstellelements und
- Figur 4:: einen Schnitt entlang der Linie IV-IV gemäß Figur 1.

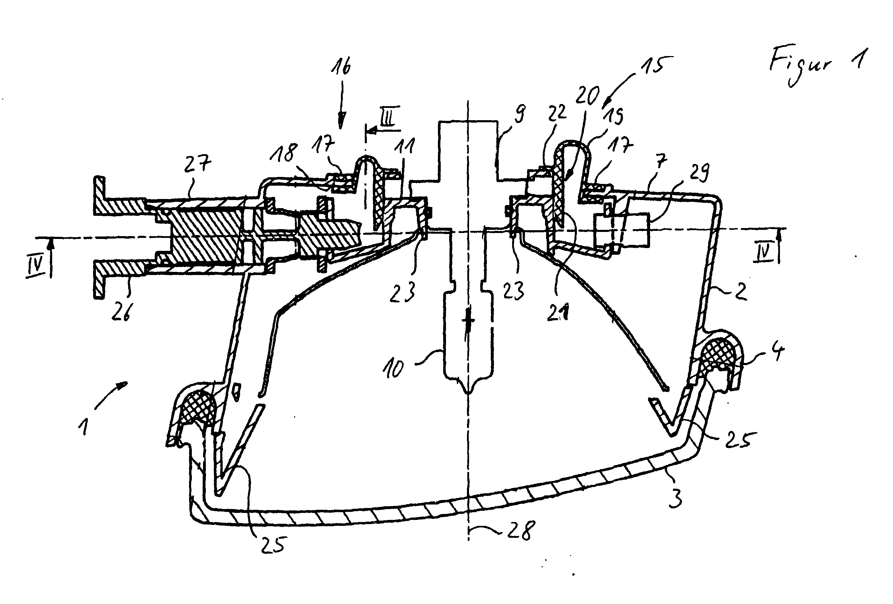

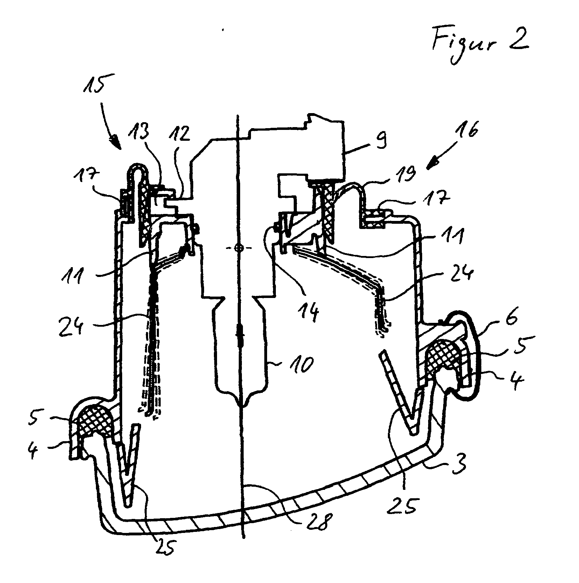

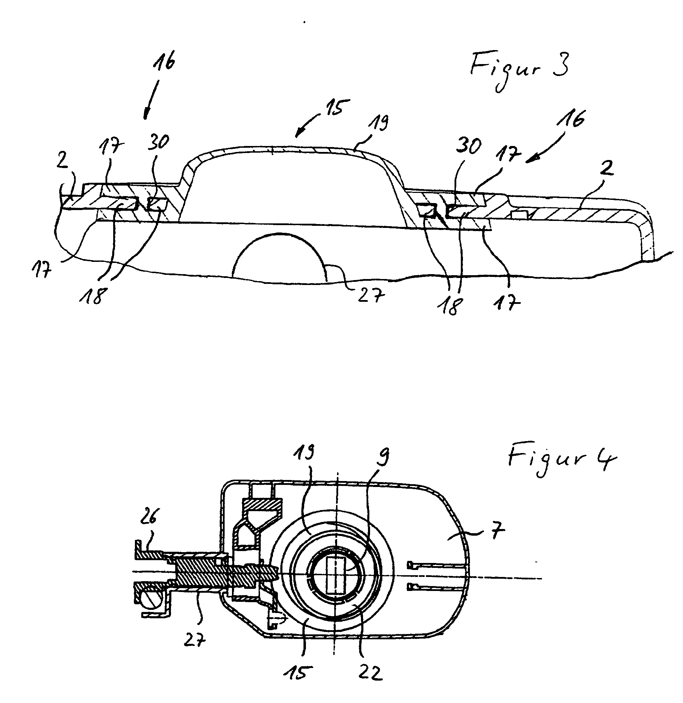

Ein Fahrzeugscheinwerfer (1) weist ein topfförmiges Gehäuse (2) auf, dessen vordere Öffnung durch eine lichtdurchlässige Abdeckscheibe (3) abgeschlossen ist. Zu diesem Zweck weisen vordere Enden (4) des Gehäuses (2) im Querschnitt u-förmige Aufnahmen auf, in denen ein Rand der Abdeckscheibe (3) über eine Dichtung (5) gelagert ist. Eine an den Rand der Abdeckscheibe (3) und dem vorderen Ende (4) angreifende C-förmige Feder (6) bewirkt eine dichte Verbindung zwischen der Abdeckscheibe (3) und dem vorderen Ende (4) des Gehäuses (2).

In einem zentralen Bereich einer im wesentlichen in einer Ebene verlaufenden Rückseite (7) des Gehäuses (2) ist eine Öffnung (8) vorgesehen, in der ein Sockel (9) einer Glühlampe (10) gehalten ist. Zu diesem Zweck ist ein Arretierungsring (11) mit in Umfangsrichtung verteilt angeordneten Ausnehmungen angeordnet, in die jeweils korrespondierende Positionierungslappen (12) des Sockels (9) eingreifen und durch relative Verdrehung entlang eines Ringspaltes (13) in dem Arretierungsring (11) festgelegt werden können. Zu diesem Zweck ist der Ringspalt (13) in Montagerichtung verjüngend ausgebildet. Der Sockel (9) weist eine Ringdichtung (14) auf, so daß er nach Montage in dem Arretierungsring (11) in demselben dicht gehalten ist.

Zwischen einem die Öffnung (8) begrenzenden Öffnungsrand und dem Arretierungsring (11) ist ein Dichtrahmen (15) vorgesehen, der einstückig mit dem Gehäuse (2) verbunden ist. Der Öffnungsrand befindet sich in einem Befestigungsbereich (16) des Dichtrahmens (15) an dem Gehäuse (2). Der Dichtrahmen (15) ist im wesentlichen ringförmig ausgebildet und weist zwei radial nach außen abstehende Befestigungslappen (17) auf, die eine Nut bilden, in der ein Befestigungsflansch (18) des Öffnungsrandes haftend eingreift.

An die Befestigungslappen (17) schließt sich in einem mittleren Abschnitt eine U-förmige Dehnungsfalte (19) an. Die Dehnungsfalte (19) ermöglicht, daß die Lampe (10) in ihrer Lage verändert werden kann. Die Dehnungsfalte (19) erstreckt sich im wesentlichen wulstförmig entgegen der Lichtaustrittsrichtung, wobei sie sich gegenüber der Rückseite (7) bzw. den Befestigungslappen (17) erhöht erstreckt.

Radial nach innen schließt sich an die Dehnungsfalte (19) ein winkelförmiger Halteabschnitt (20) an, der einen koaxial zur optischen Achse verlaufenden Haltering (21) und eine im wesentlichen parallel zu der Rückseite (7) verlaufende Anschlagfläche (22) aufweist. Die Breite des Halterings (21) korrespondiert zur Breite des Arretierungsrings (11). Der Haltering (21) umgreift den Arretierungsring (11) dichtend. Die Anschlagfläche (22) begrenzt die Lage des Arretierungsrings (11) entgegen der Lichtaustrittsrichtung. Der Halteabschnitt (20) ermöglicht somit eine dichte und umfassende Halterung des Arretierungsrings (11).

An einer Vorderseite des Arretierungsrings (11) sind radial versetzt zueinander angeordnete Halteringe (23) ausgebildet, an denen ein beweglicher Reflektor (24) gehaltert ist. In Lichtaustrittsrichtung schließt sich an dem Reflektor (24) unter Bildung eines Spaltes ein Abdeckrahmen (25), der, wie der Reflektor (24), eine verspiegelte Fläche aufweist, an. Damit der Reflektor (24) in seiner Lage verändert werden kann, ist als Verstellelement ein Schneckenrad (26) vorgesehen, das durch eine Bohrung (27) des Gehäuses (2) quer zur optischen Achse (28) ausgerichtet ist. Ein sich verjüngendes Ende des Schneckenrades (26) greift in eine Bohrung des Arretierungrings (11) ein und kann somit ein Verschwenken des Arretierungsrings (11) und damit der Glühlampe (10) bewirken. Eine auf der gegenüberliegenden Seite angeordnete Buchse (29) steht in Eingriff mit dem Arretierungsring (11) und ist koaxial zu dem Schneckenrad (26) in dem Gehäuse (2) verschiebbar gelagert, so daß bei Verstellung der Lampe (10) eine geführte Bewegung ausgeführt wird. Zusätzlich wird durch die Halterung des Schneckenrads (26) in der Bohrung (27) einerseits und der Halterung der Buchse (29) in einer entsprechenden Bohrung des Arretierungsrings andererseits die Stabilität des im flexiblen Dichtrahmens (15) gelagerten Arretierungsrings (11) gesteigert.

Zur Herstellung des Fahrzeugscheinwerfers (1) wird in einem ersten Schritt das Gehäuse (2) durch Spritzgießen hergestellt. Dabei wird der Öffnungsrand als Befestigungsflansch (18) mit in Umfangsrichtung verteilt angeordneten Löchern (30) gebildet.

In einem weiteren Herstellungsschritt wird der Dichtrahmen (15) als Elastomer hergestellt, wobei ein entsprechendes Polymer mit weitmaschiger chemischer Vernetzung in Umfangsrichtung an den Befestigungsflansch (18) angespritzt wird. Dies geschieht unter Druck und Wärme, wobei nach dem Erkalten eine formschlüssige bzw. kraftschlüssige Verbindung zwischen dem Dichtrahmen (15) und dem Gehäuse (2) erzielt wird. Der Dichtrahmen (15) wird aus einem Kautschukmaterial gefertigt, das an dem Öffnungsrand vulkanisiert wird und im Endzustand flexibel und elastisch ausgebildet ist. Nach Erkalten des Dichtrahmens (15) kann der aus einem Kunststoffmaterial bestehende Arretierungsring (11) von vorne unter Anlage an der Anschlagfläche (22) des Dichtrahmens (15) in das Gehäuse (2) eingesetzt werden.

## Patentansprüche

1. Fahrzeugscheinwerfer (1) mit einem topfförmigen Gehäuse (2), mit einer an einer Rückseite des Gehäuses (2) angeordneten Öffnung (8) zur Aufnahme einer Lampe (10), mit einem Arretierungsring (11), in dem ein Sockel (9) der Lampe (10) abnehmbar befestigt ist, mit einem den Arretierungring (11) umgebenden flexiblen Dichtrahmen (15), der mit einem Öffnungsrand des Gehäuses (2) verbunden ist, **dadurch gekennzeichnet, daß** der Dichtrahmen (15) einstückig mit dem Gehäuse (2) verbunden ist.

2. Fahrzeugscheinwerfer nach Anspruch 1, **dadurch gekennzeichnet, daß** sich der Dichtrahmen (15) in einem dem Öffnungsrand zugekehrten Befestigungsbereich (16) im wesentlichen in einer Ebene der Rückseite (7) des Gehäuses (2) erstreckt.

3. Fahrzeugscheinwerfer nach Anspruch 1 oder 2, **dadurch gekennzeichnet, daß** der Dichtrahmen (15) im Befestigungsbereich (16) gabelförmig ausgebildet ist mit zwei im Abstand zueinander verlaufenden Befestigungslappen (17), die haftend einen Befestigungsflansch (18) des Öffnungsrandes umgreifen.

4. Fahrzeugscheinwerfer nach einem der Ansprüche 1 bis 3, **dadurch gekennzeichnet, daß** der Dichtrahmen (15) eine im Querschnitt U-förmige Dehnungsfalte (19) aufweist, die sich ringförmig an den Befestigungslappen (17) anschließt.

5. Fahrzeugscheinwerfer nach einem der Ansprüche 1 bis 4, **dadurch gekennzeichnet, daß** der Dichtrahmen (15) auf einer dem Arretierungring (11) zugewandten Seite einen winkelförmigen Halteabschnitt (20) aufweist, der einen koaxial zur optischen Achse (28) verlaufenden Haltering (21) zum klemmenden Umfassen des Arretierungsrings (11) einerseits und eine quer zu einer optischen Achse (28) verlaufende Anschlagfläche (22) zur Anlage des rückseitigen Endes des Arretierungsrings (11) andererseits aufweist.

6. Fahrzeugscheinwerfer nach einem der Ansprüche 1 bis 5, **dadurch gekennzeichnet, daß** das Befestigungsflansch (18) ein Lochprofil (30) aufweist, derart, daß die Befestigungslappen (17) nach Zufuhr von Wärme und Druck unter Ausfüllen der Löcher (30) formschlüssig mit dem Befestigungflansch (18) verbunden sind.

7. Fahrzeugscheinwerfer nach einem der Ansprüche 1 bis 6, **dadurch gekennzeichnet, daß** sich die Anschlagfläche (22) im wesentlichen parallel zu einem der Befestigungslappen (17) oder des Befestigungsflansches (18) erstreckt.

8. Fahrzeugscheinwerfer nach einem der Ansprüche 1 bis 7, **dadurch gekennzeichnet, daß** sich die Anschlagfläche (22) im wesentlichen entlang einer verlängerten Ebene der Rückseite (7) erstreckt.

9. Verfahren zum Herstellen eines Fahrzeugscheinwerfers, wobei ein eine Lampe (10) aufnehmender Arretierungsring (11) in eine rückseitige Öffnung (8) eines Gehäuses (2) eingesetzt wird und durch einen mit dem Gehäuse (2) verbundenen Dichtrahmen (15) gehalten wird, **dadurch gekennzeichnet, daß** das Gehäuse (2) unter Bildung eines Öffnungsrandes durch Spritzgießen hergestellt und daß dann ein Polymer geringen Vernetzungsgrades am Umfang des Öffnungsrandes haftend vulkanisiert wird.

10. Verfahren nach Anspruch 9, **dadurch gekennzeichnet, daß** der Öffnungsrand unter Bildung eines umlaufenden Lochprofils (30) hergestellt und dann das Polymer unter Druck und Wärme mit dem Öffnungsrand (18) formschlüssig verbunden wird.

## Claims

1. Vehicle headlight (1) with a pan-shaped housing (12), with, disposed on a rear side of the housing (2), an opening (8) for taking up a light (10) with a catch ring (11) into which a base (9) of the light (10) is attached such that it can be removed, and with a flexible sealed frame (15), which is connected to an opening border of the housing (2), surrounding the catch ring (11), **characterized in that** the sealed frame (15) is connected with the housing (2) forming a single piece.

2. Vehicle headlight in accordance with claim 1, **characterized in that** the sealed frame (15) extends, in an attachment area (16) that faces the opening border, essentially in a plane of the rear side (7) of the housing (2).

3. Vehicle headlight in accordance with claims 1 or 2, **characterized in that** the sealed frame (15) is essentially, in the area of attachment (16), in the form of a fork with two fastening lugs (17) running towards each other, at a separation from each other, that clasp an attachment flange (18) of the opening border, adhering to it.

4. Vehicle headlight in accordance with one of claims 1 to 3, **characterized in that** the sealed frame (15) has, as seen in a cross-sectional view, a U-form flexibility fold (19) that, in an annular form, adjoins the fastening lugs (17).

5. Vehicle headlight in accordance with one of claims 1 to 4, **characterized in that** the sealed frame (15) has, on a side facing the catch ring (11), an angled mounting section (20) that has, on the one hand, a holding ring (21), running coaxially in relation to the optical axis (28), for clamping around the catch ring (11), and also a stop face (22), running transversely in relation to an optical axis (28), for lying on the rear side end of the catch ring (11).

6. Vehicle headlight in accordance with one of claims 1 to 5, **characterized in that** the attachment flange (18) has a hollow section (30) such that the fastening lugs (17) are, following the provision of heat and pressure when the holes (30) are filled, connected, form-locking, to the attachment flange (18).

7. Vehicle headlight in accordance with one of claims 1 to 6, **characterized in that** the stop face (22) extends essentially parallel to one of the attachment lugs (17) or to the attachment flange (18).

8. Vehicle headlight in accordance with one of claims 1 to 7, **characterized in that** the stop face (22) extends essentially along one of the extended planes of the rear side (7).

9. Process for producing a headlight whereby a catch ring (11) that takes up a light (10) is inserted into a rear opening (8) of a housing (2) and is held by a sealed frame (15) that is connected to the housing (2), **characterized in that** the housing (2) is produced by injection moulding with an opening border being formed, and **in that** a polymer having a low level of cross-linking is then vulcanized, such that it adheres, onto the periphery of the opening border.

10. Process for producing a headlight in accordance with claim 9, **characterized in that** the opening border is produced with a surrounding hollow section (30) being formed, and **in that** the polymer is then connected, form-locking, to the opening border (18), using pressure and heat.

## Revendications

1. Projecteur (1) pour véhicule avec un boîtier (2) en forme de coupelle, avec une ouverture (8) pour le logement d'une ampoule (10) sur une face arrière du boîtier (2), avec une bague de fixation (11) où le culot (9) de l'ampoule (10) est fixé de manière amovible, avec un cadre d'étanchéité (15) flexible entourant la bague de fixation (11) et raccordé à un bord d'ouverture du boîtier (2), **caractérisé en ce que** le cadre d'étanchéité (15) est raccordé en une pièce au boîtier (2).

2. Projecteur pour véhicule selon la revendication 1, **caractérisé en ce que** le cadre d'étanchéité (15) s'étend dans une zone de fixation (16) tournée vers le bord d'ouverture, principalement sur le plan de la face arrière (7) du boîtier (2).

3. Projecteur pour véhicule selon la revendication 1 ou 2, **caractérisé en ce que** le cadre d'étanchéité (15) est conformé en fourche dans la zone de fixation (16), avec deux languettes de fixation (17) s'étendant à intervalle l'une de l'autre, lesquelles enserrent un collier de fixation (18) du bord d'ouverture.

4. Projecteur pour véhicule selon l'une des revendications 1 à 3, **caractérisé en ce que** le cadre d'étanchéité (15) présente un bourrelet de déformation (19) à section transversale en U, rattaché aux languettes de fixation (17) en formant une bague.

5. Projecteur pour véhicule selon l'une des revendications 1 à 4, **caractérisé en ce que** le cadre d'étanchéité (15) présente une partie de maintien (20) en forme de cornière sur un côté dirigé vers la bague de fixation (11), laquelle comporte d'une part une bague de maintien (21) s'étendant coaxialement à l'axe optique (28) pour enserrer la bague de fixation (11), et d'autre part une surface de butée (22) s'étendant transversalement à l'axe optique (28) pour la butée de l'extrémité arrière de la bague de fixation (11).

6. Projecteur pour véhicule selon l'une des revendications 1 à 5, **caractérisé en ce que** le collier de fixation (18) comporte un profilé perforé (30) tel que les languettes de fixation (17) sont raccordées par engagement positif au collier de fixation (18) en comblant les trous (30) après application de chaleur et de pression.

7. Projecteur pour véhicule selon l'une des revendications 1 à 6, **caractérisé en ce que** la surface de butée (22) s'étend sensiblement parallèlement à une des languettes de fixation (17) ou au collier de fixation (18).

8. Projecteur pour véhicule selon l'une des revendications 1 à 7, **caractérisé en ce que** la surface de butée (22) s'étend sensiblement le long d'un plan prolongé de la face arrière (7).

9. Procédé de fabrication d'un projecteur pour véhicule, où une bague de fixation (11) dans laquelle est logée une ampoule (10) est mise en place dans une ouverture sur la face arrière (8) d'un boîtier (2) et maintenue par un cadre d'étanchéité (15) raccordé au boîtier (2), **caractérisé en ce que** le boîtier (2) est réalisé par moulage par injection en formant un bord d'ouverture, et **en ce qu'**un polymère de faible degré de réticulation est ensuite vulcanisé et rendu adhérent sur le contour du bord d'ouverture.

10. Procédé selon la revendication 9, **caractérisé en ce que** le bord d'ouverture est réalisé en formant un profilé perforé (30) circonférentiel, et **en ce que** le polymère est ensuite raccordé par engagement positif au collier de fixation (18) par application de chaleur et de pression.
